# FASCICULE DE BREVET EUROPEEN

(11) **EP 2 620 308 B1**
(45) Date de publication et mention de la délivrance du brevet: **01.06.2016**
(21) Numéro de dépôt: 13152461.3
(22) Date de dépôt: 24.01.2013
(51) Int. Cl.: B60J 7/043, B60J 7/22

(54) **Pavillon vitré de véhicule équipé d'un déflecteur, et véhicule correspondant**
Glasdach eines Fahrzeugs, das mit einem Luftleitblech ausgestattet ist, und entsprechendes Fahrzeug
Glazed roof of a vehicle provided with a deflector, and corresponding vehicle

(30) Priorité: 26.01.2012 FR 1250769; 02.03.2012 FR 1251931
(43) Date de publication de la demande: 31.07.2013
(73) Titulaire: Advanced Comfort Systems France SAS - ACS France, 79302 Bressuire Cedex (FR)
(72) Inventeur: Witkowski, Romain, 49300 Cholet (FR)
(74) Mandataire: Vidon Brevets & Stratégie

(56) Documents cités:
- DE-A1- 10 137 650
- DE-A1- 10 217 659
- DE-C1- 19 639 107

## Description

### 1. Domaine de l'invention

Le domaine de l'invention est celui des véhicules automobiles, et plus précisément des pavillons totalement ou partiellement vitrés de tels véhicules, équipés d'un ouvrant, c'est-à-dire d'un panneau mobile d'obturation d'une ouverture ménagée dans le pavillon.

Plus précisément encore, l'invention concerne la mise en oeuvre d'un déflecteur escamotable pour le toit ouvrant d'un véhicule automobile équipé d'un pavillon vitré.

Un pavillon vitré du type mentionné ci-dessus, muni d'un déflecteur escamotable, est connu de DE 19639107 C

### . 2. Etat de la technique

### 2.1 pavillon vitré

La tendance actuelle, en matière de véhicule automobile, qu'il s'agisse d'une automobile, d'un véhicule utilitaire, d'un camion, ou d'un autobus, est de proposer de plus en plus de surfaces vitrées.

Ainsi, on a proposé notamment des véhicules présentant un pavillon équipé d'un ou plusieurs éléments vitrés. Dans certains cas, l'intégralité du pavillon est en verre ou en matériau similaire (polycarbonate par exemple), laissant passer les rayons du soleil.

Des solutions ont été également proposées pour dégager des ouvertures dans un tel pavillon, notamment pour pouvoir former un toit ouvrant.

### 2.2 occultation

Il est également connu d'équiper ces pavillons vitrés de moyens d'occultation totale ou partielle de la surface vitrée. Il peut en effet être nécessaire de protéger les occupants des effets du soleil.

Parmi les moyens d'occultation connus (store d'occultation à enrouleur ou vélum par exemple), on distingue les mises en oeuvre manuelles et motorisées, dans lesquelles le déplacement de la toile d'occultation, ou d'un vélum, entre une position déployée et une position repliée, est assuré par des moyens d'actionnement, typiquement un moteur ou un motoréducteur.

Le couplage d'entraînement de la toile d'occultation avec les moyens d'actionnement s'effectue généralement par l'intermédiaire d'au moins un, et généralement deux, câbles d'entraînement qui exercent leur action respectivement sur chaque côté d'une barre de tirage reliée à l'extrémité de la toile d'occultation. Une solution similaire peut être mise en oeuvre pour un vélum.

### 2.3 déflecteur,

Il est par ailleurs connu que la libération au moins partielle d'une ouverture dans un pavillon d'un véhicule peut donner naissance à des perturbations, et en particulier à un phénomène acoustique de battement de l'air, dans l'habitacle de ce véhicule.

Ceci est dû notamment au fait que de l'air pénètre à l'intérieur du véhicule, via l'ouverture dégagée dans le pavillon.

Ce phénomène, dont les conditions peuvent varier notamment en fonction de la vitesse et du degré d'ouverture du toit ouvrant, nuit au confort des occupants.

Pour lutter contre ce phénomène, on a proposé de monter des déflecteurs escamotables, à actionnement manuel ou motorisé, qui se déploient le long de l'ouverture, du côté orienté vers l'avant du véhicule. La fonction de ces déflecteurs est d'éliminer, ou à tout le moins réduire au maximum, ce phénomène de battement à l'intérieur du véhicule en déviant le flux aérodynamique au-delà de l'ouverture du toit ouvrant.

Ce type de déflecteur comprend un élément ou écran escamotable, qui peut être rigide ou souple (par exemple une toile).

Par exemple, selon une technique connue, l'écran déflecteur peut être monté articulé dans un logement situé sous le toit ouvrant.

Plus précisément, l'écran déflecteur peut être fixé à un bras de manoeuvre, actionné via une motorisation, pour assurer son déplacement entre une position rentrée dans le logement situé sous le toit ouvrant et correspondant à la position fermée de celui-ci, et au moins une position déployée, hors de ce logement correspondant à une position ouverte du toit ouvrant.

Un tel bras de manoeuvre permet de faire basculer l'écran déflecteur, et donc de redresser ou de coucher progressivement cet écran lors de son déplacement vers l'arrière ou vers l'avant du véhicule respectivement.

### 2.4 inconvénients de l'art antérieur,

Un inconvénient de ces techniques connues de déflecteurs de pavillon est la complexité et/ou l'encombrement de leurs moyens d'actionnement, et de l'écran déflecteur lui-même, en particulier en position rentrée, ou escamotée, de l'écran déflecteur.

L'encombrement et la complexité de tels déflecteurs sont des inconvénients d'autant plus importants que le pavillon est vitré, puisqu'il faut alors dissimuler, à l'aide de sérigraphie, les différentes pièces mécaniques, ce qui va à l'encontre de l'objectif de maximisation de la surface vitrée, ou clair de baie.

De plus ceci augmente le poids global du pavillon, et son encombrement global.

Par ailleurs, le guidage (de la postion rentrée à la position sortie, ou inversement) et/ou la tenue (lorsqu'il est déployé ou partiellement déployé) des déflecteurs actuels ne sont pas optimales.

En d'autres termes, les solutions de l'art antérieur présentent donc un encombrement, en particulier en position rentrée du déflecteur, ainsi qu'un poids relativement important.

Elles nécessitent en outre un assemblage, un réglage et une maintenance relativement complexes.

### 3. Objectifs de l'invention

L'invention a notamment pour objectif de pallier ces inconvénients de l'art antérieur.

Plus précisément, un objectif de l'invention est de fournir une technique de pavillon au moins partiellement vitré, qui soit le plus possible affleurant avec la carrosserie du véhicule automobile, et qui mette en oeuvre un déflecteur rétractable dont les moyens d'actionnement sont particulièrement simples, peu encombrants et efficaces.

Un autre objectif de l'invention est, selon au moins un mode de réalisation de l'invention, de minimiser l'encombrement d'un tel déflecteur, notamment en position rentrée.

Un objectif supplémentaire de l'invention, selon au moins un mode de réalisation, est d'optimiser le guidage et/ou la tenue (lorsqu'il est déployé ou partiellement déployé) d'un tel déflecteur.

Encore un objectif de l'invention est, selon au moins un mode de réalisation, d'améliorer le rendu esthétique du pavillon tout en améliorant ses performances aérodynamiques.

Encore un autre objectif de l'invention est, selon au moins un mode de réalisation, de fournir une telle technique qui permette de simplifier la fabrication, le montage et/ou la maintenance du pavillon et de ses équipements, et donc de réduire les coûts correspondants.

Un autre objectif de l'invention, selon au moins un mode de réalisation, est de fournir une telle technique augmentant la surface vitrée, ou clair de baie, et/ou permettant la mise en oeuvre d'une ouverture maximisée.

### 4. Exposé de l'invention

Ces objectifs, ainsi que d'autres qui apparaîtront plus clairement par la suite, sont atteints à l'aide d'un pavillon vitré pour véhicule automobile, comprenant au moins une partie fixe et un panneau mobile par rapport à la partie fixe, entre une position d'obturation, ou fermée, dans laquelle il obture l'ouverture formée dans ou à côté de la partie fixe, et au moins une position d'aération, ou ouverte, dans laquelle ladite ouverture est au moins partiellement libérée, le déplacement dudit panneau mobile étant mis en oeuvre à l'aide de deux rails de guidage placés au voisinage respectivement de chaque bord latéral dudit panneau mobile, ledit pavillon comprenant en outre un système déflecteur comprenant un écran déflecteur et des moyens d'actionnement dudit écran déflecteur pour assurer son déplacement entre au moins une position de déflexion et une position escamotée, ou inversement.

Selon l'invention, lesdits moyens d'actionnement comprennent un support mobile associé à des moyens de guidage et actionné par des moyens de commande, et comprennent en outre deux bielles, une bielle supérieure montée pivotante sur ledit support mobile et sur ledit écran déflecteur, et une bielle inférieure montée pivotante sur ledit support mobile et sur ledit écran déflecteur.

Ainsi, contrairement aux solutions de l'art antérieur dans lesquelles l'écran déflecteur est progressivement redressé lorsqu'il est déployé et progressivement couché lorsqu'il est escamoté, l'invention propose de maintenir constante ou de faire varier légèrement l'inclinaison de l'écran déflecteur lors de son déplacement, c'est-à-dire au cours de son mouvement de rentrée ou de sortie, sans toutefois qu'il soit nécessaire de coucher totalement l'écran déflecteur en position rentrée, ou escamotée (c'est-à-dire sans qu'il soit nécessaire que l'écran déflecteur soit sensiblement parallèle au panneau fixe sous lequel il est logé).

Ceci permet notamment de loger l'écran déflecteur et son mécanisme d'actionnement dans un espace réduit en position rentrée, ou escamotée.

Ainsi, l'invention propose un système déflecteur compact, mécaniquement simple et aisé à monter sur un véhicule, sans adaptation particulière de celui-ci, ni mise en oeuvre de moyens complexes.

Selon un mode de réalisation particulier, ladite bielle supérieure s'étend parallèlement à ladite bielle inférieure.

Selon une mise en oeuvre, la distance entre les points de liaison de la bielle supérieure avec ledit support mobile et ledit écran déflecteur respectivement est égale à la distance entre les points de liaison de la bielle inférieure avec ledit support mobile et ledit écran déflecteur respectivement.

Ainsi la cinématique d'entraînement et de verrouillage, pour le déflecteur, est effectuée par des moyens mécaniques simples.

Dans un mode de réalisation particulier, lesdits moyens d'actionnement sont configurés de sorte que l'inclinaison dudit écran déflecteur par rapport auxdits rails reste sensiblement identique lors d'un déplacement entre deux desdites positions.

Ainsi, on propose de maintenir constante l'inclinaison de l'écran déflecteur lors de son déplacement, c'est-à-dire au cours de son mouvement de rentrée ou de sortie.

Ceci permet notamment de loger l'écran déflecteur et son mécanisme d'actionnement dans un espace réduit en position rentrée, ou escamotée.

Dans le cas où l'écran déflecteur présente un galbe sur sa longueur, ceci permet en outre de conserver le galbe de l'écran déflecteur en position rentrée de ce dernier. Dans cette position rentrée, le galbe de l'écran déflecteur épouse, ou coïncide avec, le galbe du cadre du panneau mobile et le cadre du panneau fixe, et est donc moins encombrant qu'un écran déflecteur qui serait couché dans cette position rentrée, conformément à l'art antérieur.

Dans un mode de réalisation particulier, ledit support mobile agit sur un élément de guidage fixé à ladite bielle inférieure ou à ladite bielle supérieure.

Selon une mise en oeuvre particulière, ledit élément de guidage est guidé dans une piste ou une lumière de guidage d'une pièce fixe montée dans un rail de guidage du panneau mobile, de façon à guider ledit écran déflecteur entre ladite au moins une position de déflexion et ladite position escamotée.

De façon préférentielle, ladite piste de guidage présente au moins une portion courbe correspondant à ladite au moins une position de déflexion dudit écran déflecteur.

Avantageusement, la position escamotée dudit écran déflecteur correspond à la position fermée de ladite partie mobile, et ladite au moins une position de déflexion correspond à au moins une position ouverte de ladite partie mobile.

Préférentiellement, les moyens de guidage sont aptes à se déplacer dans un rail de guidage d'au moins un élément d'occultation d'au moins une partie de la surface dudit pavillon.

Selon différentes mises en oeuvre, l'écran déflecteur est formé par au moins une toile ou par au moins un élément rigide.

L'invention concerne également les véhicules automobiles équipés d'un pavillon vitré tel que décrit ci-dessus.

### 5. Liste des figures

D'autres caractéristiques et avantages de l'invention apparaîtront plus clairement à la lecture de la description suivante de deux modes de réalisation particuliers de l'invention, donnés à titres de simples exemples illustratifs et non limitatifs, et des dessins annexés, parmi lesquels :
- les figures 1A à 1C illustrent schématiquement, dans une vue de dessus, la cinématique d'ensemble du pavillon vitré monté sur un véhicule selon un mode de réalisation particulier de l'invention ;
- les figures 2A à 4D illustrent, selon un premier mode de réalisation, le fonctionnement du mécanisme d'actionnement de l'écran déflecteur du pavillon selon les figures 1A à 1C :

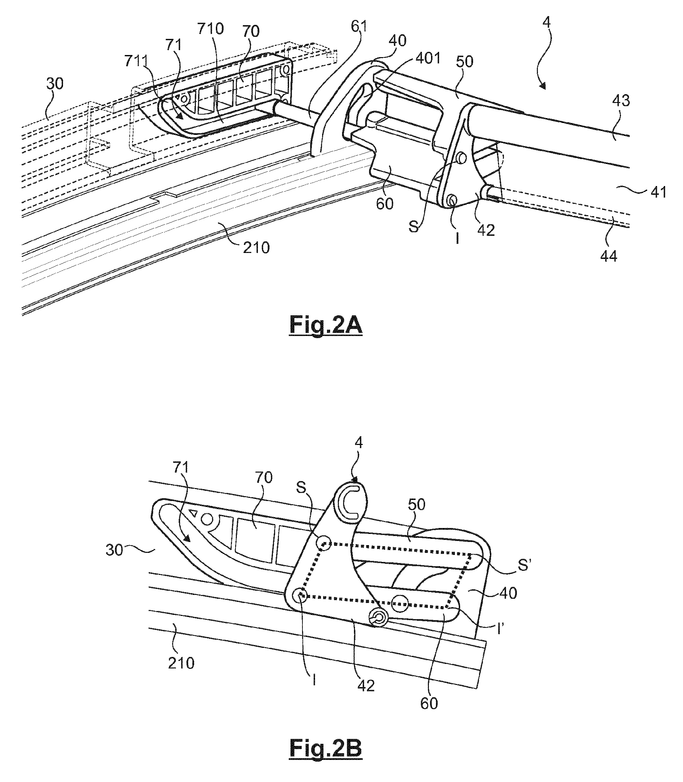

   - les figures 2A à 2D sont des vues de l'écran déflecteur en position escamotée ;

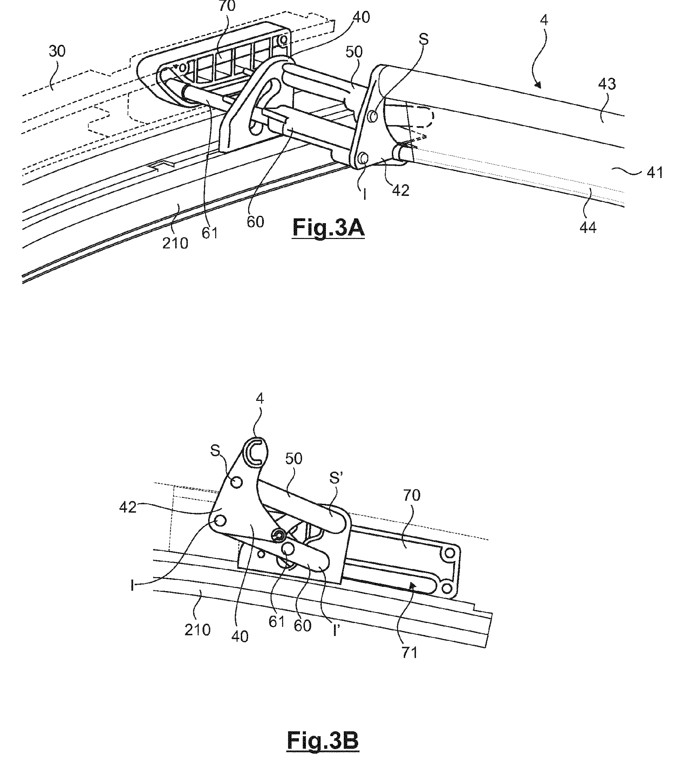

   - les figures 3A et 3B sont des vues de l'écran déflecteur en position partielle de déflexion, et

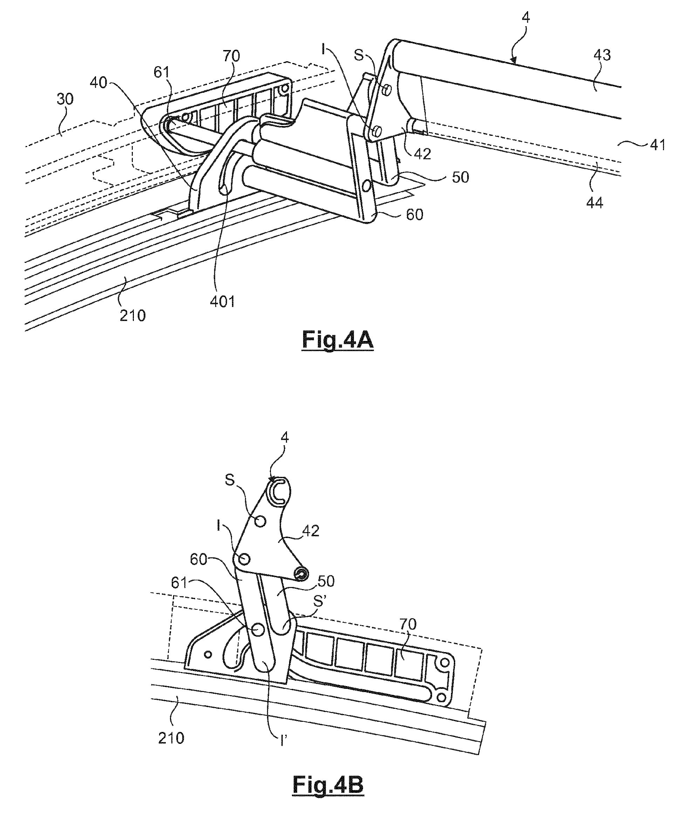

   - les figures 4A à 4D sont des vues de l'écran déflecteur en position de déflexion ;

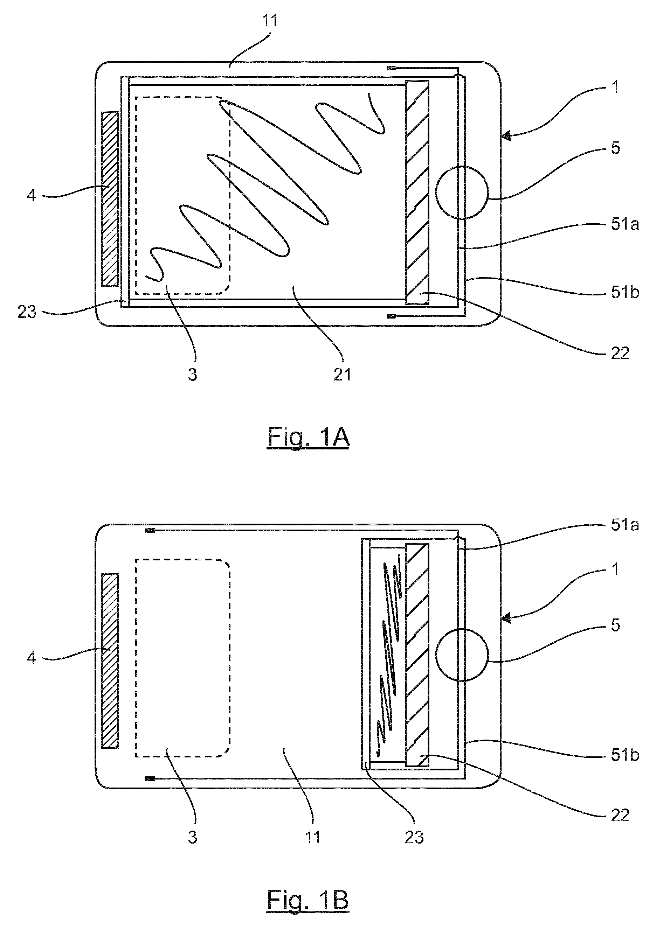

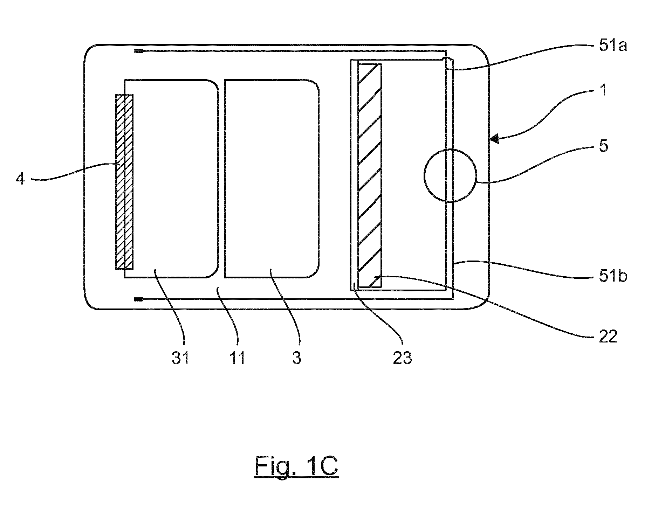

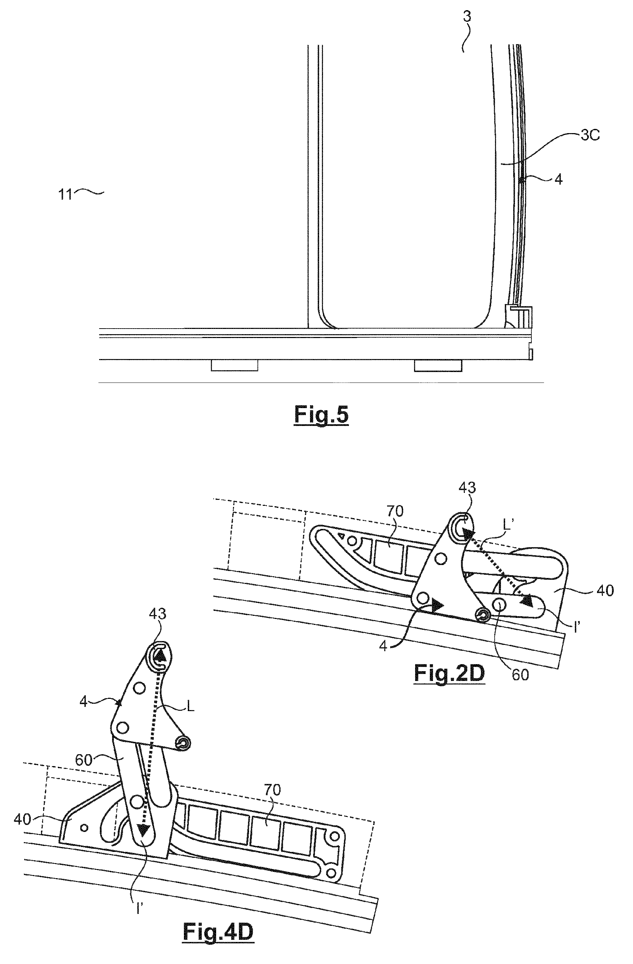

- la figure 5 est une vue partielle, de dessus, du pavillon selon les figures 1A à 1C ;

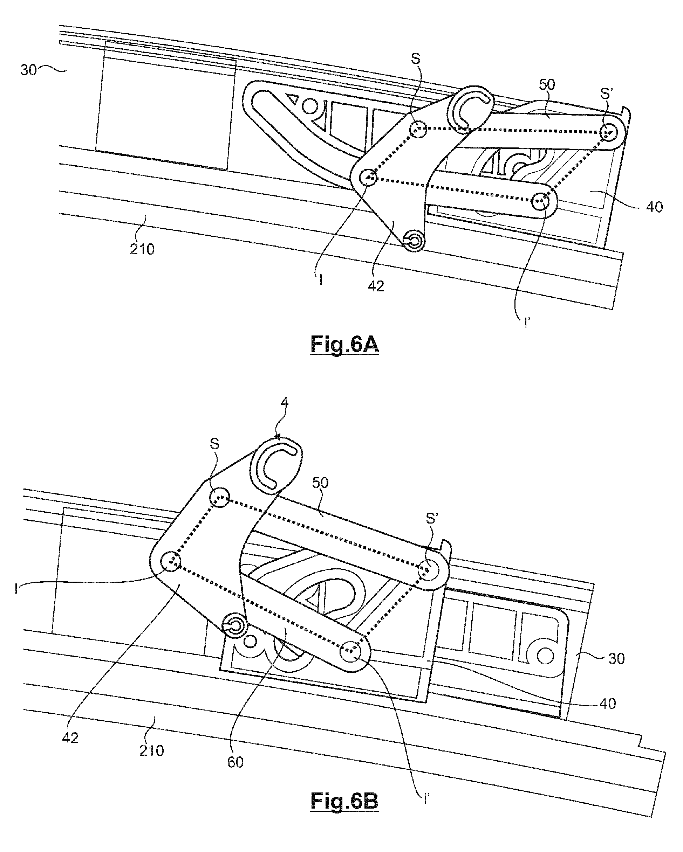

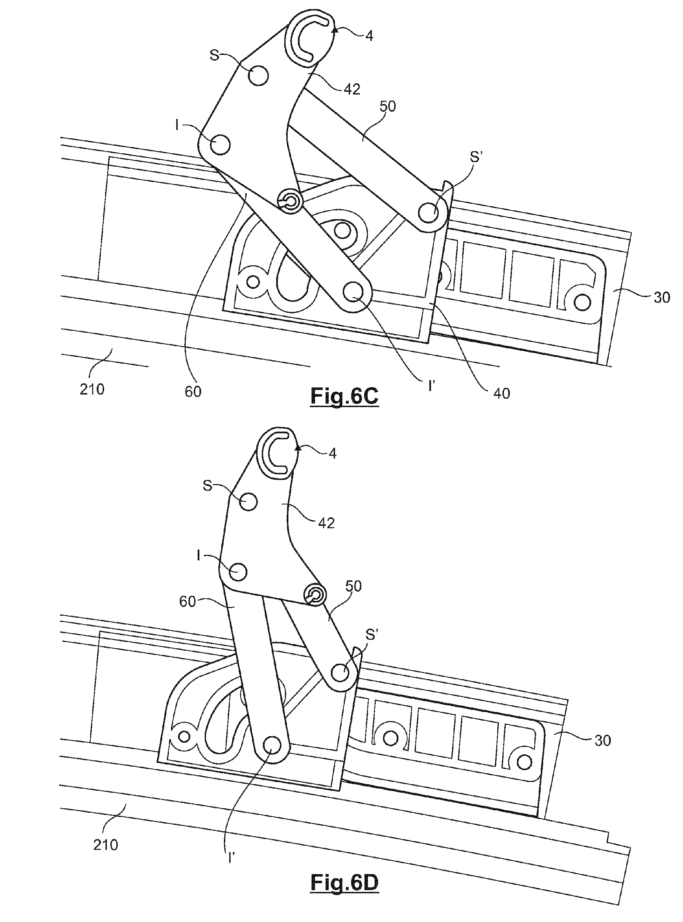

- les figures 6A à 6D illustrent, selon un deuxième mode de réalisation, le fonctionnement du mécanisme d'actionnement de l'écran déflecteur du pavillon.

### 6. Description détaillée de deux modes de réalisation de l'invention

### 6.1 Principe général

Le principe général de l'invention repose donc sur la mise en oeuvre de moyens d'actionnement articulés d'un déflecteur de pavillon entre une position rétractée (ou escamotée, ou rentrée) et au moins une position déployée (sortie) qui assurent une inclinaison constante ou sensiblement constante du déflecteur au cours de son escamotage, ou bien une faible variation de son inclinaison sans toutefois qu'il soit nécessaire de coucher totalement l'écran déflecteur en position rentrée.

Ceci permet d'optimiser l'encombrement du déflecteur en position rentrée.

### 6.2 Pavillon vitré

On présente, en relation avec les figures 1A à 1C la cinématique d'ensemble du pavillon vitré monté sur un véhicule selon un mode de réalisation particulier de l'invention.

Le pavillon 1 comprend une partie fixe 11 et un panneau mobile 3, ainsi que des moyens d'occultation aptes à occulter au moins une partie de la surface du pavillon 1.

Ces moyens d'occultation comprennent une toile 21 mobile entre au moins une position d'occultation et une position de rangement, un tube d'enroulement 22 apte à dérouler et enrouler la toile 21, et une barre de tirage 23 permettant de guider la toile le long de rails longitudinaux (non représentés sur les figures 1A à 1C) ménagés sur le pavillon vitré 1.

Dans le mode de réalisation illustré, la toile 21 est entraînée par l'intermédiaire d'un ou plusieurs éléments d'entraînement 51a et 51b, en l'occurrence des câbles, actionnés par des moyens d'actionnement 5, tel qu'un moteur.

Lorsque le toit ouvrant est fermé (figures 1A et 1B), le panneau mobile 3 se trouve sensiblement dans le plan défini par la partie fixe 11. Lors de son ouverture, le panneau mobile 3 se décale par rapport à ce plan (vers l'intérieur du véhicule dans le mode de réalisation illustré), puis peut se déplacer en coulissement, le long de deux rails prévus à cet effet (non représentés sur les figures).

Selon les mises en oeuvre, le panneau mobile 3 peut prendre une ou plusieurs positions intermédiaires d'ouverture, et peut généralement être également basculé, ou incliné, alors qu'il est en position fermée.

Un déflecteur 4 avec un écran déflecteur 41 est prévu, pour diriger le flux d'air au-delà de l'ouverture dégagée, et éviter, au moins en partie, que ce flux ne pénètre à l'intérieur de l'habitacle.

Cet écran déflecteur 41 est mobile entre une position d'escamotage, ou position escamotée, et au moins une position de déflexion. En position escamotée, ce qui correspond à une position fermée du panneau mobile 3, l'écran déflecteur 41 est situé sous la partie fixe 11 du pavillon vitré 1, à l'avant de l'ouverture 31 (c'est-à-dire du côté correspondant à l'avant du véhicule). Lorsque le panneau mobile 3 est partiellement ou totalement ouvert, l'écran déflecteur 41 est cette fois situé au niveau de l'ouverture 31 du pavillon vitré 1 et est en position de déflexion.

Le cas échéant, plusieurs positions de déflexion peuvent être définies, correspondant à des hauteurs différentes de l'écran déflecteur 41 au-dessus de la partie fixe 11, et sélectionnées en fonction de la vitesse du véhicule et/ou du degré d'ouverture du panneau mobile 3.

La figure 1A présente le pavillon vitré 1 dans une position dans laquelle la partie mobile 3 est dans la position fermée.

Dans cette situation, la toile 21 peut être déployée, et l'écran déflecteur 41 est escamoté sous le panneau fixe 11 du pavillon vitré 1. Ici, la toile 21 est déployée intégralement et recouvre donc toute la surface du panneau mobile 3, la barre de tirage 23 étant à proximité du déflecteur 4. Bien sûr, la toile 21 peut être déployée partiellement, ou repliée intégralement (pour prendre la position de la figure 1B).

Pour passer de la position déployée présentée en figure 1A à la position repliée de la figure 1B, les moyens d'actionnement 5 de la toile 21 agissent sur les câbles 51a et 51b de manière à enrouler la toile 21. Dans la position repliée de la figure 1B, le store, et en particulier la barre de tirage 23 n'est plus visible : elle se trouve entre une partie extérieure du pavillon sérigraphiée ou tôlée, et une partie intérieure de garniture.

Le panneau mobile 3 peut passer de sa position d'obturation de l'ouverture 31 à une position d'ouverture partielle ou totale, lorsque la toile est repliée. Dans ce cas, il peut être souhaitable de déployer le déflecteur 4.

Selon les modes de réalisation, ce déploiement peut être systématique (dès que le panneau mobile est ouvert) ou contrôlé, par exemple en fonction de la vitesse du véhicule, du mesure du flux d'air, du degré d'ouverture,...).

### 6.3 Premier mode de réalisation

On décrit en relation avec les figures 2A à 5 le fonctionnement, selon un premier mode de réalisation, du mécanisme d'actionnement, ou de rentrée/sortie, de l'écran déflecteur 41 du pavillon selon les figures 1A à 1C.

Comme on le verra par la suite, le système de déflecteur 4, qui comprend l'écran déflecteur 41 et son mécanisme d'actionnement, est avantageux en ce sens qu'il est moins encombrant que les solutions connues de l'art antérieur, notamment en position rentrée de l'écran déflecteur 41, quand ce dernier est escamoté sous la partie fixe 11 du pavillon vitré 1.

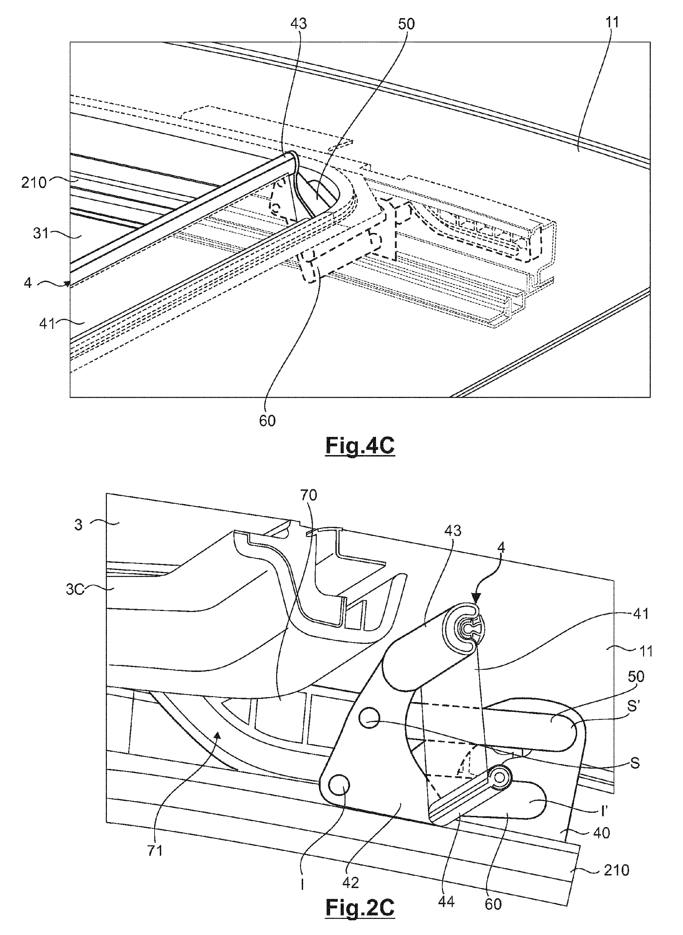

La figure 2C montre donc l'écran déflecteur 41 en position escamotée, sous la partie fixe 11 du pavillon vitré 1, ce qui correspond à une position fermée du panneau mobile 3. La toile d'occultation 21 (non visible sur cette figure) peut être intégralement déployée et recouvrir le panneau mobile 3 le long de rails longitudinaux de guidage 210 de la toile 21 (un seul de ces rails est visible sur les figures).

Le système déflecteur 4 comprend, dans ce mode de réalisation, un écran souple de déflection 41 comprenant un bord supérieur 43 et un bord inférieur 44, les bords supérieur 43 et inférieur 44 étant reliés à chacune de leurs extrémités par un embout 42 (un seul des embouts 42 est visible sur les figures).

A des fins de clarté, ce mécanisme est décrit ci-après en relation avec un premier bord latéral de l'écran déflecteur 41, étant entendu que le même mécanisme peut être mis en oeuvre au niveau du deuxième bord latéral de l'écran déflecteur 41 (c'est-à-dire au niveau de l'autre embout).

Le mécanisme de rentrée/sortie (ou d'actionnement) de l'écran déflecteur 41 comprend un coulisseau, ou navette, 40 d'entraînement de l'écran déflecteur 41 apte à coulisser en translation dans une glissière du rail de guidage 210 de la toile 21 par le biais de moyens de commande. Ces moyens de commande comprennent classiquement un moteur, de l'électronique de commande, des câbles et/ou tout autre moyen connu de l'homme du métier.

Dans une variante, le mouvement du coulisseau 40 est piloté par le panneau mobile ou tout autre élément mobile du pavillon.

Le coulisseau 40 comprend une lumière 401 courbe en forme d'arc de cercle.

L'écran déflecteur 41 est relié au coulisseau 40 par une bielle supérieure 50 et une bielle inférieure 60. Les bielles supérieure 50 et inférieure 60 sont chacune montées pivotantes sur l'embout 42 de l'écran déflecteur 41 autour d'un axe S et I respectivement, et sur le coulisseau 40 autour d'un axe S' et I' respectivement. Les bielles supérieure 50 et inférieure 60 s'étendent dans des plans parallèles, et le coulisseau 40 s'étend dans un plan parallèle au plan de l'embout 42. En outre, la distance entre les axes S et S' (c'est-à-dire l'entraxe de la biellette supérieure 50) est égale à la distance entre les axes I et I' (c'est-à-dire l'entraxe de la biellette inférieure 60). Par ailleurs, la droite passant par les axes S et S' est parallèle à la droite passant par les axes I et I'.

Ainsi, comme illustré sur la figure 2B, les axes S, S', I et I' forment un parallélogramme déformable (articulé).

Dans le rail de guidage 30 du panneau mobile 3 est fixée une pièce 70 dans laquelle est ménagée une piste ou rainure de guidage 71 de forme rectiligne (c'est-à-dire parallèle au rail de guidage) sur une première portion 710 la plus en avant du véhicule et courbe vers le haut (c'est-à-dire vers l'extérieur du véhicule) sur une deuxième portion 711.

Un axe de guidage 61 est fixé à la bielle inférieure 60. Une extrémité d'un axe de guidage 61, qui présente la forme d'un doigt, pénètre dans la piste de guidage 71 de la pièce fixe 70 et est apte à s'y déplacer. Cet axe de guidage 61 est fixé sur un bord de la bielle inférieure 60 et traverse la lumière 401 du coulisseau 40.

Les figures 2A à 2D illustrent l'écran déflecteur 41 en position rentrée. Le coulisseau 40 de l'écran déflecteur 41 est situé dans sa position la plus en avant du véhicule. L'axe de guidage 61 de la bielle inférieure 60 est située à l'extrémité de la portion rectiligne 710 de la piste de guidage 71 (c'est-à-dire dans sa position la plus en avant du véhicule et la plus basse) et en partie inférieure de la lumière 401 du coulisseau 40.

Les figures 3A et 3B illustrent l'écran déflecteur 41 en position intermédiaire ou partielle de déflexion. Le coulisseau 40 et l'écran déflecteur 41 se sont déplacés vers l'arrière du véhicule. L'axe de guidage 61, entraîné par le coulisseau 40, s'est déplacé dans la portion rectiligne 710 de la piste de guidage 71 vers l'arrière du véhicule. A mesure que l'axe de guidage 61 est entraîné par le coulisseau 40 et se déplace dans la portion courbe 711 (c'est-à-dire qu'il remonte), il contraint la bielle inférieure 60 à pivoter autour des axes I et I', ce qui entraîne le pivotement de la bielle supérieure 50 autour des axes S et S'. Il est à noter que les bielles inférieure 60 et supérieure 50 restent sensiblement parallèles au cours de leur pivotement.

Le parallélogramme articulé S, S', I et I' formé par le coulisseau 40, l'embout 42 de l'écran déflecteur 41 et les bielles inférieure 50 et supérieure 60 permet de maintenir constante l'inclinaison de l'écran déflecteur 41 pendant sa montée (c'est-à-dire son passage de la position rentrée à la position sortie, ou son déplacement de l'avant vers l'arrière du véhicule).

Les figures 4A à 4D illustrent l'écran déflecteur 41 en position sortie, la figure 4C illustrant l'écran déflecteur 41 en position sortie ou déployée dans l'ouverture 31 ménagée par le panneau mobile 3.

Le coulisseau 40 de l'écran déflecteur 41 est situé dans sa position la plus en arrière du véhicule. L'axe de guidage 61, entraîné par le coulisseau 40, est situé en extrémité de la portion courbe 711 de la piste de guidage 71 (c'est-à-dire dans sa position la plus en arrière du véhicule et la plus haute) et en position haute dans la lumière 401 du coulisseau 40. Cet axe de guidage 61 a entraîné la rotation maximale de la bielle inférieure 60.

Contrairement aux solutions de l'art antérieur qui nécessitent de redresser progressivement l'écran déflecteur lors de sa sortie, le parallélogramme articulé S, S', I et I' permet de maintenir constante l'inclinaison de l'écran déflecteur par rapport aux rails 30, 210 tout au long de la sortie de l'écran déflecteur 41.

On note que les bielles supérieure 50 et inférieure 60 s'étendent de façon sensiblement verticale et sont toujours parallèles lorsque l'écran déflecteur 41 est sorti. Elles s'étendent de façon sensiblement horizontale, c'est-à-dire sensiblement parallèle au rail 210, en position rentrée de l'écran déflecteur 41.

On comprend aisément qu'un déplacement du coulisseau 40 vers l'avant du véhicule entraîne la rentrée de l'écran déflecteur 41, le parallélogramme articulé S, S', I et I' permettant de maintenir constante l'inclinaison de l'écran déflecteur 41 lors de son déplacement de sa position sortie à sa position rentrée.

L'encombrement du système déflecteur 4, et donc de l'écran déflecteur 41 et de ses moyens d'actionnement, est ainsi optimisé en position rentrée de l'écran déflecteur 41.

L'écran déflecteur 41 possédant un galbe dont la direction et l'amplitude est fonction du véhicule dans lequel il est mis en oeuvre, le fait de conserver la même orientation de galbe en position rentrée de l'écran déflecteur 41 permet ainsi d'épouser la forme du cadre 3C de panneau mobile 3 et du cadre du panneau fixe 11 qui présentent ce même galbe (voir figure 5).

La mise en oeuvre d'un écran déflecteur fixé sur un bras de manoeuvre, conformément à l'art antérieur, le bras de manoeuvre étant monté pivotant sur le coulisseau 40, imposerait une rotation de l'écran déflecteur dont l'orientation du galbe ne coïnciderait plus avec celle du cadre de panneau mobile 3 et du cadre du panneau fixe 11.

Il serait donc nécessaire de faire parcourir une distance plus importante à l'écran déflecteur afin de le loger en avant du cadre du panneau mobile 3, ce qui engendrerait un encombrement de l'écran déflecteur en position rentrée plus important que pour la solution de l'invention.

Les moyens d'actionnement de l'écran déflecteur 41 conformément à l'invention permettent un rangement plus compact du système déflecteur 4 du fait que les moyens d'actionnement sont articulés et pliables.

Comme illustré sur les figures 2D et 4D, la distance entre l'axe de rotation I' de la bielle inférieure 60 autour du coulisseau 40 et le bord supérieur 43 du déflecteur 4 en position sortie (cette distance est égale à L sur la figure 4D) est considérablement réduite en position rentrée de l'écran déflecteur 41 (cette distance est égale à L' , inférieure à L, sur la figure 2D).

Le principe de pliage de l'invention ne pourrait pas être mis en oeuvre si l'écran déflecteur était fixé sur un bras de manoeuvre, conformément à l'art antérieur, monté pivotant sur le coulisseau 40. La distance L' serait en effet égale à L et l'encombrement de l'écran déflecteur en position rentrée serait donc le même que l'encombrement de l'écran déflecteur en position sortie.

Il serait donc nécessaire de faire parcourir une distance plus importante à l'écran déflecteur afin de loger ce dernier en avant du panneau mobile 3, ce qui augmenterait son encombrement en position rentrée par rapport à la solution de l'invention.

### 6.4 Deuxième mode de réalisation

On décrit en relation avec les figures 6A à 6D le fonctionnement, selon un deuxième mode de réalisation, du mécanisme d'actionnement, ou de rentrée/sortie, de l'écran déflecteur 41 du pavillon selon les figures 1A à 1C.

Dans ce mode de réalisation, les axes S, S', I et I' forment un quadrilatère articulé dont les côtés ne sont pas parallèles (il ne s'agit donc pas d'un parallélogramme).

Plus généralement, le coulisseau 40, l'embout 42 de l'écran déflecteur 41 et les bielles inférieure 50 et supérieure 60 peuvent former un quelconque quadrilatère articulé dont les sommets sont les axes S, S', I et I'.

Dans cet exemple, bien que l'inclinaison de l'écran déflecteur 41 par rapport aux rails 30, 210 varie pendant son passage de la position sortie (figure 6D) à la position rentrée (figure 6A), l'écran déflecteur 41 n'est pas complètement couché en position rentrée (figure 6A). Par conséquent, cette approche permet également de réduire l'encombrement de l'écran déflecteur et de son mécanisme d'actionnement, en position rentrée, par rapport aux solutions de l'art antérieur qui prévoient de coucher l'écran déflecteur.

### 6.5 Variantes

Dans un mode de réalisation particulier, les moyens d'actionnement du panneau mobile sont utilisés pour agir également sur le coulisseau 40, et donc sur l'écran déflecteur 41, de manière à contrôler le passage de la position d'escamotage à une position d'utilisation de l'écran déflecteur 41, et inversement.

En d'autres termes, il peut être prévu des moyens d'indexation des positions escamotée et déployée de l'écran déflecteur à des positions fermée et ouverte respectivement du panneau mobile.

Dans des variantes des deux modes de réalisation décrits ci-dessus, il peut être envisagé par exemple :
- de ne pas mettre en oeuvre de toile d'occultation. Dans ce cas, le coulisseau de l'écran déflecteur est apte à se déplacer dans un rail spécifique ;
- d'actionner le panneau vitré mobile et le système déflecteur manuellement, par exemple à l'aide d'une poignée de commande unique ;
- de prévoir des moyens d'actionnement de l'écran déflecteur sur un seul côté de l'écran déflecteur ;
- de relier l'axe de guidage 61 à la biellette supérieure 50, et non pas à la biellette inférieure 60 comme dans les modes de réalisation décrits ci-dessus.

## Revendications

1. Pavillon vitré (1) pour véhicule automobile, comprenant au moins une partie fixe (11) et un panneau mobile (3) par rapport à la partie fixe (11), entre une position d'obturation, ou fermée, dans laquelle il obture l'ouverture (31) formée dans ou à côté de la partie fixe (11), et au moins une position d'aération, ou ouverte, dans laquelle ladite ouverture (31) est au moins partiellement libérée, le déplacement dudit panneau mobile (3) étant mis en oeuvre à l'aide de deux rails de guidage (30) placés au voisinage respectivement de chaque bord latéral dudit panneau mobile (3),
ledit pavillon (1) comprenant en outre un système déflecteur comprenant un écran déflecteur (41) et des moyens d'actionnement dudit écran déflecteur (41) pour assurer son déplacement entre au moins une position de déflexion et une position escamotée, ou inversement,
**caractérisé en ce que** lesdits moyens d'actionnement comprennent un support mobile (40) associé à des moyens de guidage et actionné par des moyens de commande, et comprennent en outre deux bielles, une bielle supérieure (50) montée pivotante sur ledit support mobile et sur ledit écran déflecteur (41), et une bielle inférieure (60) montée pivotante sur ledit support mobile (40) et sur ledit écran déflecteur (41).

2. Pavillon vitré selon la revendication 1, **caractérisé en ce que** ladite bielle supérieure (50) s'étend parallèlement à ladite bielle inférieure (60).

3. Pavillon vitré selon la revendication 1 ou 2, **caractérisé en ce que** la distance entre les points de liaison de la bielle supérieure (50) avec ledit support mobile (40) et ledit écran déflecteur (41) respectivement est égale à la distance entre les points de liaison de la bielle inférieure (60) avec ledit support mobile (40) et ledit écran déflecteur (41) respectivement.

4. Pavillon vitré selon la revendication 3, **caractérisé en ce que** lesdits moyens d'actionnement sont configurés de sorte que l'inclinaison dudit écran déflecteur (41) par rapport auxdits rails (30) reste sensiblement identique lors d'un déplacement entre deux desdites positions.

5. Pavillon vitré selon l'une des revendications 1 à 4, **caractérisé en ce que** ledit support mobile (40) agit sur un élément de guidage fixé à ladite bielle inférieure (60) ou à ladite bielle supérieure (50).

6. Pavillon vitré selon la revendication 5, **caractérisé en ce que** ledit élément de guidage (61) est guidé dans une piste ou une lumière de guidage (71) d'une pièce fixe (70) montée dans un rail de guidage (30) du panneau mobile (3), de façon à guider ledit écran déflecteur (41) entre ladite au moins une position de déflexion et ladite position escamotée.

7. Pavillon vitré selon la revendication 6, **caractérisé en ce que** ladite piste de guidage (71) présente au moins une portion courbe (711) correspondant à ladite au moins une position de déflexion dudit écran déflecteur (41).

8. Pavillon vitré selon l'une quelconque des revendications 1 à 7, **caractérisé en ce que** la position escamotée dudit écran déflecteur (41) correspond à la position fermée de ladite partie mobile, et ladite au moins une position de déflexion correspond à au moins une position ouverte de ladite partie mobile.

9. Pavillon vitré selon l'une des revendications 2 à 8, **caractérisé en ce que** les moyens de guidage sont aptes à se déplacer dans un rail de guidage d'au moins un élément d'occultation (21) d'au moins une partie de la surface dudit pavillon (1).

10. Pavillon vitré selon l'une quelconque des revendications 1 à 9, **caractérisé en ce que** ledit écran déflecteur (41) est formé par au moins une toile et/ou par au moins un élément rigide.

11. Véhicule automobile comprenant au moins un pavillon vitré selon l'une des revendications 1 à 10.

## Patentansprüche

1. Glasdach (1) für Kraftfahrzeug, das mindestens einen stationären Teil (11) und eine Platte (3), die in Bezug auf den stationären Teil (11) zwischen einer Verschlussposition oder geschlossenen Position, in der sie die in oder neben dem stationären Teil (11) ausgebildete Öffnung (31) verschließt und mindestens einer Belüftungsposition, oder offenen Position, in der die Öffnung (31) mindestens teilweise freigegeben ist, beweglich ist, wobei die Bewegung der beweglichen Platte (3) mit Hilfe von zwei in der Nähe jeweils jedes seitlichen Rands der beweglichen Platte (3) platzierten Führungsschienen (30) umgesetzt wird,
wobei das Dach (1) außerdem ein Ablenksystem umfasst, das einen Ablenkschirm (41) und Mittel zum Betätigen des Ablenkschirms (41) umfasst, um seine Bewegung zwischen mindestens einer Ablenkposition und einer eingefahrenen Position oder umgekehrt sicherzustellen,
**dadurch gekennzeichnet, dass** die Betätigungsmittel einen beweglichen Träger (40) umfassen, der den Führungsmitteln zugeordnet ist und von Steuermitteln betätigt wird, und außerdem zwei Pleuel, ein oberes Pleuel (50), das schwenkend an dem beweglichen Träger und an dem Ablenkschirm (41) installiert ist, und ein unteres Pleuel (60), das schwenkend an dem beweglichen Träger (40) und an dem Ablenkschirm (41) installiert ist, umfasst.

2. Glasdach nach Anspruch 1, **dadurch gekennzeichnet, dass** sich das obere Pleuel (50) parallel zu dem unteren Pleuel (60) erstreckt.

3. Glasdach nach Anspruch 1 oder 2, **dadurch gekennzeichnet, dass** die Entfernung zwischen den Verbindungspunkten des oberen Pleuels (50) zu dem beweglichen Träger (40) und dem Ablenkschirm (41) jeweils gleich der Entfernung zwischen den Verbindungspunkten des unteren Pleuels (60) zu dem beweglichen Träger (40) und dem Ablenkschirm (41) ist.

4. Glasdach nach Anspruch 3, **dadurch gekennzeichnet, dass** die Betätigungsmittel derart ausgelegt sind, dass die Neigung des Ablenkschirms (41) in Bezug auf die Schienen (30) bei einer Bewegung zwischen den zwei Positionen im Wesentlichen gleich bleibt.

5. Glasdach nach einem der Ansprüche 1 bis 4, **dadurch gekennzeichnet, dass** der bewegliche Träger (40) auf ein Führungselement einwirkt, das an dem unteren Pleuel (60) oder an dem oberen Pleuel (50) befestigt ist.

6. Glasdach nach Anspruch 5, **dadurch gekennzeichnet, dass** das Führungselement (61) in einer Führungsbahn oder einem Führungskanal (71) eines in einer Führungsschiene (30) der beweglichen Platte (3) montierten stationären Teils (70) derart geführt wird, dass der Ablenkschirm (41) zwischen der mindestens einen Ablenkposition und der eingefahrenen Position geführt wird.

7. Glasdach nach Anspruch 6, **dadurch gekennzeichnet, dass** die Führungsbahn (71) mindestens einen gekrümmten Teil (711) aufweist, der der mindestens einen Ablenkposition des Ablenkschirms (41) entspricht.

8. Glasdach nach einem der Ansprüche 1 bis 7, **dadurch gekennzeichnet, dass** die eingefahrene Position des Ablenkschirms (41) der geschlossenen Position des beweglichen Teils entspricht, und dass die mindestens eine Ablenkposition mindestens einer offenen Position des beweglichen Teils entspricht.

9. Glasdach nach einem der Ansprüche 2 bis 8, **dadurch gekennzeichnet, dass** die Führungsmittel dazu geeignet sind, sich in einer Führungsschiene mindestens eines Verdunkelungselements (21) mindestens eines Teils der Oberfläche des Dachs (1) zu bewegen.

10. Glasdach nach einem der Ansprüche 1 bis 9, **dadurch gekennzeichnet, dass** der Ablenkschirm (41) aus mindestens einem Tuch und/oder mindestens einem starren Element gebildet ist.

11. Kraftfahrzeug, das mindestens ein Glasdach nach einem der Ansprüche 1 bis 10 umfasst.

## Claims

1. Glazed roof (1) for a motor vehicle, comprising at least one fixed part (11) and a panel (3) which is movable, in relation to the said fixed part (3), between an occluding, or closed, position in which it occludes the opening (31) formed in, or beside, the fixed part (11), and at least one ventilating, or open, position in which the said opening (31) is at least partially unblocked, the displacement of the said movable panel (3) being implemented with the aid of two guide rails (30) which are positioned, respectively, in the vicinity of each lateral edge of the said movable panel (3),
the said roof (1) also comprising a deflector system comprising a deflector screen (41) and means for actuating the said deflector screen (41) in order to ensure its displacement between at least one deflecting position and a retracted position, or *vice versa,*
**characterised in that** the said actuating means comprise a movable support (40) associated with guide means and actuated by control means, and also comprise two links, an upper link (50) which is mounted in a pivoting manner on the said movable support and on the said deflector screen (41), and a lower link (60) which is mounted in a pivoting manner on the said movable support (40) and on the said deflector screen (41).

2. Glazed roof according to Claim 1, **characterised in that** the said upper link (50) extends parallel to the said lower link (60).

3. Glazed roof according to Claim 1 or 2, **characterised in that** the distance between the points linking the upper link (50) with the said movable support (40) and the said deflector screen (41), respectively, is equal to the distance between the points linking the lower link (60) with the said movable support (40) and the said deflector screen (41), respectively.

4. Glazed roof according to Claim 3, **characterised in that** the said actuating means are configured in such a way that the inclination of the said deflector screen (41) in relation to the said rails (30) remains substantially the same when a displacement between two of the said positions occurs.

5. Glazed roof according to one of Claims 1 to 4, **characterised in that** the said movable support (40) acts on a guide element fixed to the said lower link (60) or to the said upper link (50).

6. Glazed roof according to Claim 5, **characterised in that** the said guide element (61) is guided in a guide track or a guide slot (71) in a fixed piece (70) mounted in a guide rail (30) belonging to the movable panel (3), so as to guide the said deflector screen (41) between the said at least one deflecting position and the said retracted position.

7. Glazed roof according to Claim 6, **characterised in that** the said guide track (71) has at least one curved portion (711) corresponding to the said at least one deflecting position of the said deflector screen (41).

8. Glazed roof according to any one of Claims 1 to 7, **characterised in that** the retracted position of the said deflector screen (41) corresponds to the closed position of the said movable part, and the said at least one deflecting position corresponds to at least one open position of the said movable part.

9. Glazed roof according to one of Claims 2 to 8, **characterised in that** the guide means are capable of being displaced in a rail for guiding at least one element (21) for occluding at least part of the surface of the said roof (1).

10. Glazed roof according to any one of Claims 1 to 9, **characterised in that** the said deflector screen (41) is formed by at least one cloth and/or by at least one rigid element.

11. Motor vehicle comprising at least one glazed roof according to one of Claims 1 to 10.
